# EUROPEAN PATENT SPECIFICATION

(11) **EP 0 473 587 B1**
(45) Date of publication and mention of the grant of the patent: **31.08.1994**
(21) Application number: 90902853.2
(22) Date of filing: 01.02.1990
(51) Int. Cl.: B63B 9/06, B32B 3/00, B32B 15/08

(54) **METHOD OF PRODUCING AN IMPROVED HULL**
VERFAHREN ZUR HERSTELLUNG EINES RUMPFES
PROCEDE DE PRODUCTION D'UNE COQUE AMELIOREE

(30) Priority: 08.02.1989 SE 8900437
(43) Date of publication of application: 11.03.1992
(73) Proprietor: JÖNSSON, Sven, S-145 90 Norsborg (SE)
(72) Inventor: JÖNSSON, Sven, S-145 90 Norsborg (SE)
(74) Representative: Rosenquist, Per Olof
(86) International application number: SE9000065
(87) International publication number: WO9009309

(56) References cited:
- US-A- 3 268 924
- US-A- 4 073 674
- US-A- 4 365 580

## Description

The present invention relates to a method of producing an improved hull at new building of and renovating ships and boats with metal hulls for accomplishing high finish, good heat insulation and good acoustic attenuation.

In the present specification and claims "metal hull" is used in the meaning of hulls made of metal and metal alloys, such as steel and aluminium.

In today's vessels with metal hulls, the metal sheet lies outermost against the cold surroundings and therefore assumes this temperature. This leads to that moisture in the warmer air inside the hull condenses against the sheet metal and condensed water will wet the inside insulation and will flow down beneath the floor plates. To this must be added that the ships of today contain much electronics, which necessitates climate control which because of the air circulation will result in further condensation underneath the floor plates. Because of this the heat insulation of the vessel will function poorly and rusting will take place on the inside of the hull and underneath the floor plates.

Efforts have been made to solve these problems by isolating the vessels from the inside, but because of regulations of material to be used inside boats and ships, you are limited to the use of fire proof materials such as mineral wool. The moisture passes through these materials and is condensed on the cold metal surface. The insulation will become moist and the environment will remain bad and further, no skeleton attenuation at all will be obtained.

Another difficult problem, esp. for marine force applications, is the acoustic attenuation of vessels with metallic hulls. According to one technique a material having viscoelastic properties is applied on the inside of the hull and according to another technique such a material is applied on the outside of the hull. The material might for example be a bitumen emulsion. These techniques will work quite well in warm waters, but as soon as the water temperature decreases, the acoustic attenuation will be reduced because of the hardening of the material, which thereby will loose it's ability of acoustic attenuation. For most part of the year the temperature of the Baltic sea will be +4°C or below, at which temperature no acoustic attenuation will be obtained at all.

Another problem with metallic hull vessels, which has not found a satisfying solution either, is the difficulty of obtaining an acceptable surface finish because of the buckles and irregularities which always occur with metallic hull vessels. This is especially true for light built boats and ships made of aluminium. In the yacht industry, where very high demands are put on the finish of the hull the costs are very high for accomplishing the desired high finish. Further there are not any good solution to the problem of isolating the hull.

US-A-3 268 924 discloses a hull made with sandwich structure in which the skins are metallic and bonded to the core with a rigid cement.

The object of the present invention is to provide a method with which the above disadvantages are eliminated and which results in a hull having good heat insulation properties and at the same time eliminates the condensation problems and provides good acoustic attenuation and which creates opportunities for obtaining high finish with reduced labour, lower increase of weight and greater strength.

This is achieved with the method according to the present invention, which is characterized in that sheets or mats of cellular plastic are glued to the outside of the hull with the aid of a glue giving an elastic or viscoelastic glue joint.

The use of a glue giving an elastic or viscoelastic glue joint between hull and cellular plastic layer creates a dilatation joint with the ability of absorbing shear forces. The cellular plastic layer itself has a certain ability of absorbing shear forces without being damaged or being afflicted negatively and with the method according to the invention the risk for damages because of e.g. large temperature varations and/or heavy strains are eliminated. In a heavy collision with an item, only a local injury occurs which does not afflict the surrounding hull portions and since the cellular plastic absorbs at least part of the energy in a shock the risk for an injury of the metallic hull is reduced considerably. Therefor it is also possible to use hulls made according to the invention for e.g. ice-going vessels.

According to the invention sheets or mats made from pressure-expanded cellular plastic with a uniform density of between 50 and 400 kg/m³ are used, preferably PVC (polyvinyl chloride) cellular plastic. However, also other plastics complying with the demands of uniform density and mechanical strength might be used. Sheets having a thickness of 10 - 70 mm are applied.

According to the invention sheets or mats are glued in two or several layers onto the hull, whereby the density of the boards in the different layers might be the same or different.

According to the invention the hard surface layer is created by application of a layer of reinforced plastic, after an optional surface treatment, on the outside of the glued-on cellular plastic layer.

In order to obtain a larger adhering surface, mats or sheets being embossed on the surface which is to be placed against the hull, are used.

The mats or sheets are applied by stepwise vacuum-gluing in such a way that after the application of the sheet or mat material on the hull with the aid of glue, said sheet or mat is covered with a sheeting with overlap towards the free metallic surface, whereupon a sub-pressure is applied between the sheeting and the sheet metal.

The mats or sheets are perforated in order to facilitate the vacuum gluing.

It is also possible to use cellular plastic material in the form of sheets or mats, which is especially adapted for application on double curved surfaces, being cut in squares and wherein the squares of the material are connected to each other with the aid of a carrier layer. This type of material might be used on certain types of surfaces, esp. when the demands on the heat insulation are not so high.

According to the present invention one thus accomplishes on for example aluminium vessels a hull with all the advantages of an aluminium construction while at the same time all it's disadvantages are eliminated, such as poor insulation; that it is hard to work, if high finish is desired, since the material can not be heat straightened; that when the desired finish is accomplished with the aid of putty, much weight is added and a great part of the gain in using an aluminium hull is lost.

With the method according to the invention, in contrast to conventional technique a weak aluminium construction can be erected, which is part of a rigid sandwich construction. This gives the construction a strength which for example a pure plastic construction can not give, at least not with a reasonable thickness. In practise, the use of the method according to the invention leads to that the aluminium sheet metal thickness might be reduced down to about 20% of the thickness normally used.

The construction made according to the invention has a very high constructive strength with a very low weight compared to known constructions. The insulation on the outside results in that all fire demands and demands on that the insulation must not be moisture absorbing are eliminated. A heat insulation of the hull is obtained and since the diffusion barrier lies on the right side the condensation problems are eliminated. The insulation of the bottom significantly reduces the energy consumption for maintaining the desired climate inside the hull. To this is added that no treatment of the inside of the hull is needed at all, whereby it's inside will be easy to inspect, easy to keep clean and all corrosion problems are eliminated.

The method according to the invention can be used on existing ships as well as when building new ships. The method is also suitable for arresting corrosive attack both on the inside and on the outside. It can be used also where the metal sheet is partly perforated because of corrosive attack. The method according to the invention might also be used for the insulation of the deck and deck housing.

The advantages of the construction according to the invention are illustrated more in detail below in connection with an example.

### Example

Calculations were made on a hull construction made according to the present invention and on a standard hull made of aluminium.

The aluminium hull made according to the invention comprises 4 mm Al sheet metal erected on 70 mm high aluminium frame ribs, on which is glued 25 mm PVC with a density of 75 kg/m³, which in turn is covered with 3 mm glass fibre armoured plastic. Calculations were made for embodiments with and without inner lining on the frame ribs, that is with and without an air pocket.

### Assumptions

- Total area A = 300 m² (expose area)
- Under water area Au = 100 m²
- Surrounding temp. = -10°C - +40°C
- Inside temp. +20°C, ΔT₁ = 20°C; ΔT₂ = 30°C
- Inside lining is mounted on the Al frame ribs. The total area of the Al frame ribs is estimated to 10% of A (exposed area).

### Calc. of heat transmission coefficient

1. Sandwich alone Al - PVC - GAP
2. Sandwich + 70 mm air
3. Sandwich + Al frame ribs
4. Scaled K-value (from 2 and 3)
5. Al-plate alone (standard hull)

### Heat transfer coefficients chosen

- air/wall outside α_{y} = 30 W/m² °C
- air/wall inside αᵢ = 8 W/m² °C
- water/wall α_{y} = 500 W/m² °C

K₁ = 1.02 W/m² °C
K₂ = 0.27 W/m² °C
K₃ = 1.02 W/m² °C
K₄ = 0.35 W/m² °C (assuming that 10% of inner wall surface is Al frame ribs)
The K-value obtained presumes non-moving air in the frame rib spaces. The column width (70 mm) + leaks result in that the true K value is reduced:
- at small air movements in the space only heat transfer results in a reduction of the K value to K_{eff} = 0.8 W/m² °C.

The true K value will be somwhere between 0.35 and 0.8 and is chosen to Kᵣₑₐₗ = 0.6 W/m² °C.

K5 = 7.7 W/m² °C (non-insulated Al sheet metal underneath the water surface)
Losses at temperature differences T₁ = 20°C and T₂ = 30°C, constructive factor n = 20%:
Q_{1.1} = 1,2 * 1,02 * 300 * 20 = 7344 (W)
Q_{1.2} = 1,2 * 1,02 * 300 * 30 = 11016 (W)
Q_{4.1} = 1,2 * 0,35 * 300 * 20 = 2520 (W)
Q_{4.2} = 1,2 * 0,35 * 300 * 30 = 3780 (W)
Assumed true loss:
Q_{real.1} = 1,2 * 0,6 * 300 * 20 = 4320 (W)
Q_{real.2} = 1,2 * 0,6 * 300 * 30 = 6480 (W)
Corresponding values for a standard hull made of Al sheet metal (100 m² underneath the water surface)
Q₁ = 7,7 * 100 * 20 = 15400 (W)
Q₂ = 7,7 * 100 * 30 = 23100 (W)
If insulation is present, and even if it is damp, a certain insulation effect is obtained, these values will be somewhat lower.

### Dew point:

At 70% atmospheric humidity and an inner temperature of 20°C the dew point t_{dew} ≈ 14°C.

The temperature on internal aluminium sheet metal surface at:
outside temperature +4°C = 17°C.
outside temperature -10°C = 16°C.

The conclusion will thus be that also under extreme conditions the sheet metal temperature will lie over the dew point, whereby all condensing problems are eliminated, even under the floor plates.

The high sheet metal temperature implies at the same time that the viscoelastic material can be optimized for the prevailing sheet metal temperature, which means that maximum acoustic attenuation is obtained.

## Claims

1. Method of producing an improved hull when new building of and renovating ships and boats with metal hulls for accomplishing high finish, good heat insulation and good acoustic attenuation, **characterized in** that sheets or mats of cellular plastic are glued to the outside of the hull with the aid of a glue giving an elastic or viscoelastic glue joint.

2. Method according to claim 1, **characterized in** that the sheets or mats are applied in two or several layers on the hull, whereby the density of the boards in the different layers may be the same or different.

3. Method according to claim 1, **characterized in** that a hard surface layer is provided by the application of a layer of reinforced plastic, after an optional surface treatment, on the outside of the cellular plastic layer being glued on to the hull.

## Patentansprüche

1. Verfahren zum Herstellen eines verbesserten Rumpfes für das Erbauen und Renovieren von Schiffen und Booten mit einem Metallrumpf, um eine hohe Fertigungsqualität, eine gute Wärmeisolierung und eine gute Schallisolierung zu erzielen, dadurch gekennzeichnet, daß Bogen oder Matten aus zellförmigem Kunststoff auf der Außenseite des Rumpfes mittels eines elastischen Klebstoffs festgeklebt sind, wodurch eine elastische oder viskoelastische Klebverbindung hergestellt wird.

2. Verfahren nach Anspruch 1, dadurch gekennzeichnet, daß die Bögen oder Matten in zwei oder mehreren Lagen auf dem Rumpf angeordnet sind, wobei die Dichten der Tafeln der unterschiedlichen Lagen gleich oder voneinander unterschiedlich sein können.

3. Verfahren nach Anspruch 1, dadurch gekennzeichnet, daß eine harte Oberflächenlage durch das Aufbringen einer Lage von versteiftem Kunststoff, nach wahlweisem Vornehmen einer Obeflächenbehandlung, auf der Außenseite der zellförmigen Kunststofflage ausgebildet wird, welche auf den Rumpf aufgeklebt ist.

## Revendications

1. Procédé de fabrication d'une coque améliorée lors de la construction et de la rénovation de navires et de bateaux à coques métalliques destiné à obtenir une haute finition, une bonne isolation thermique et une bonne atténuation acoustique, caractérisé en ce que des feuilles ou matelas de matière plastique cellulaire sont collés sur l'extérieur de la coque à l'aide d'une colle formant joint collé élastique ou viscoélastique.

2. Procédé selon la revendication 1, caractérisé en ce que les feuilles ou matelas sont appliqués en deux ou plus de deux couches sur la coque, de sorte que les densités des panneaux des différentes couches peuvent être identiques ou différentes.

3. Procédé selon la revendication 1, caractérisé en ce qu'une couche formant surface dure est agencée en appliquant sur l'extérieur de la couche de matière plastique cellulaire collée sur la coque une couche de matière plastique renforcée, après un traitement optionnel de la surface.
